# EUROPEAN PATENT SPECIFICATION

(11) **EP 2 072 854 B1**
(45) Date of publication and mention of the grant of the patent: **12.07.2017**
(21) Application number: 08253907.3
(22) Date of filing: 08.12.2008
(51) Int. Cl.: F16F 9/56, B60G 17/027, B62K 25/28, F16F 9/32, F16F 9/44

(54) **Suspension and straddle-type vehicle**
Aufhängung und Grätschsitz-Fahrzeug
Suspension et véhicule de type à enfourcher

(30) Priority: 11.12.2007 JP 2007319093
(43) Date of publication of application: 24.06.2009
(73) Proprietor: Yamaha Hatsudoki Kabushiki Kaisha, Iwata-shi, Shizuoka 438-8501 (JP)
(72) Inventor: Eguchi, Munemitu c/o Yamaha Hatsudoki K.K, Shizuoka-ken 438-8501 (JP)
(74) Representative: Grünecker Patent- und Rechtsanwälte PartG mbB

(56) References cited:
- JP-A- 57 163 745
- JP-A- 57 192 643
- US-B1- 6 318 525

## Description

### Technical Field

The present invention relates to a suspension apparatus including a damper, a spring adjuster, and a spring, and a straddle-type vehicle mounted with the suspension.

### Background Art

A suspension is used for a rear cushion unit for a two-wheeled vehicle or the like. The suspension like this includes a suspension provided with a damper, a spring, and a spring adjuster (mechanism for adjusting a spring load). The suspension like this is disclosed in, for example, Japanese Utility Model No. 2573071 and Japanese Examined Utility Model Publication No. 7-12746. Hereinafter, the outline of the suspension disclosed in these patent documents will be described.

In an oil damping unit (suspension) disclosed in Japanese Utility Model No. 2573071, the damper has a spring seat disposed on the outer periphery of a cylinder, has a spring receiver (spring seat) disposed on a piston rod side, and has a suspension spring interposed between the spring seat and the spring receiver (spring seat). In this suspension, an oil pressure jack (spring adjuster) fixed to the outer periphery of the cylinder supports the spring seat disposed on the outer periphery of the cylinder. The spring adjuster changes the position of the spring seat disposed on the outer periphery of the cylinder to change the spring load of the suspension spring. In this patent document, the oil pressure jack (spring adjuster) is constructed of: an oil chamber disposed in a thick portion of the cylinder; and a plunger housed in this oil chamber, and the plunger supports the spring seat.

Moreover, in a suspension (rear cushion unit) disclosed in Japanese Examined Utility Model Publication No. 7-12746, a damper cylinder has an annular guide fixed to the outer periphery thereof. An annular oil chamber is formed between the outer periphery of the damper cylinder and the annular guide. A sliding member is constructed so as to be displaced in the axial direction when the sliding member has oil pressure applied thereto. The base end portion of a piston rod and the sliding member have spring seats fixed thereto, respectively, and the base end portion of a piston rod and the sliding member have a suspension spring (spring) fixed thereto, respectively.

In the spring adjuster described in Japanese Utility Model No. 2573071, the oil chamber is disposed in the thick portion of the cylinder, and the shape of the cylinder is complicate, so that the spring adjuster is hard to manufacture. Moreover, in the spring adjuster described in the patent document 2, the oil chamber is disposed between the outer periphery of the damper cylinder and the annular guide. In this structure, many seals for the oil chamber are required, so that the spring adjuster is hard to manufacture. The present invention proposes a suspension having an advantage in manufacture by employing a whole new structure for the oil chamber of the spring adjuster.

US-B1-6318525 discloses suspension apparatus having the features of the pre-characterizing portion of claim 1.

JP-57-163745-A discloses suspension apparatus wherein the top of the cylinder is closed and an annular cover is fixed to the top of the cylinder to define an oil chamber for a ring-shaped piston. A valve connects the oil chamber to a fluid source.

### Summary

A suspension apparatus (hereinafter also referred to as a suspension for conciseness) includes: a damper; a spring adjuster; and a spring. The damper includes: a cylinder; a cap for covering an opening at one end of the cylinder; a piston fitted in the cylinder; and a piston rod extending from the piston to the other end side of the cylinder. The cap has a cover portion that is opposed to the outer peripheral surface of one end portion of the cylinder and which covers the one end portion of the cylinder. Moreover, the spring adjuster includes: an oil chamber formed in a peripheral groove between the inner peripheral surface of the cover portion and the outer peripheral surface of the one end portion of the cylinder; and a ring-shaped piston fitted in the oil chamber. The spring is disposed in a compressed state between a first spring seat formed on the ring-shaped piston and a second spring seat fixed to the tip portion of the piston rod.

The suspension apparatus is characterized in that: the suspension apparatus further comprises a first damping adjustment mechanism for adjusting an amount of oil in the oil chamber of the spring adjuster; and the first damping adjustment mechanism is provided at the cap and includes an operating part for operating the first damping adjustment mechanism.

According to this suspension, the cap for covering the opening at one end of the cylinder has the cover portion that is opposed to the outer peripheral surface of the one end portion of the cylinder and which covers the one end portion of the cylinder. The oil chamber of the spring adjuster is formed in the peripheral groove between the inner peripheral surface of the cover portion and the outer peripheral surface of the one end portion of the cylinder. Thus, the spring adjuster can be easily manufactured.

### Brief Description of the Drawings

Embodiments of the invention are described hereinafter, by way of example only, with reference to the drawings.
Fig. 1 is a side view to show the fixing structure of a suspension of a straddle-type vehicle according to one embodiment of the present invention.
Fig. 2 is a diagram to show the suspension according to the one embodiment of the present invention.
Fig. 3 is a diagram to show a first damping adjustment mechanism of the suspension according to the one embodiment of the present invention.
Fig. 4 is a diagram to show the state of use of the first damping adjustment mechanism of the suspension according to the one embodiment of the present invention.

### Detailed Description

Hereinafter, a suspension according to embodiments of the present invention will be described with reference to the accompanying drawings. Here, in the respective drawings, the members and parts performing the same functions are denoted by the same reference symbols. The present invention is not limited to the following embodiments.

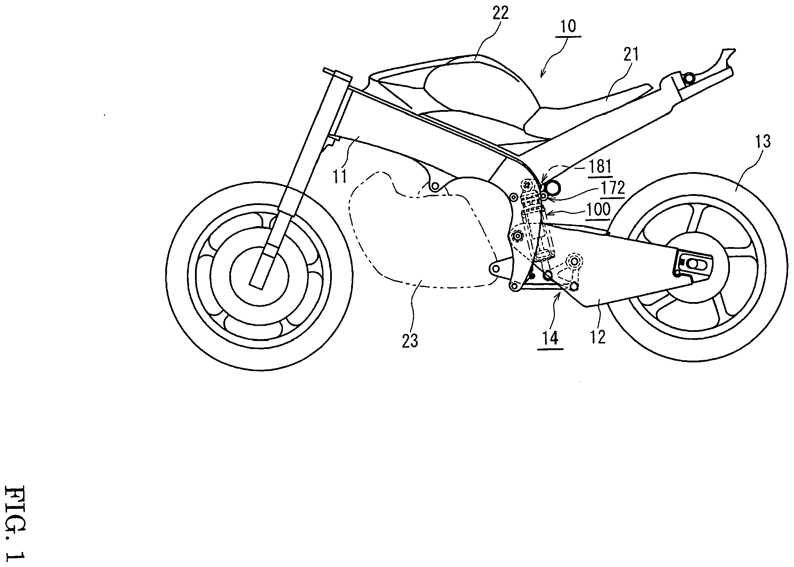

This suspension 100, as shown in Fig. 1, is used for a rear cushion unit of a straddle-type vehicle 10. In this embodiment, the straddle-type vehicle 10 has a rear wheel 13 mounted on the tip portion of a swing arm 12 fixed to a vehicle body frame 11 so as to freely swing. The suspension 100 has its one end fixed to the vehicle body frame 11 and has the other end fixed to a swing mechanism 14 of the swing arm 12. Here, as shown in Fig. 1, in this embodiment, the straddle-type vehicle 10 has a seat 21 fixed to the top of the vehicle body frame 11 and has a fuel tank 22 disposed forward of the seat 21 and has a driving unit 23 such as an engine disposed in a space under the fuel tank 22.

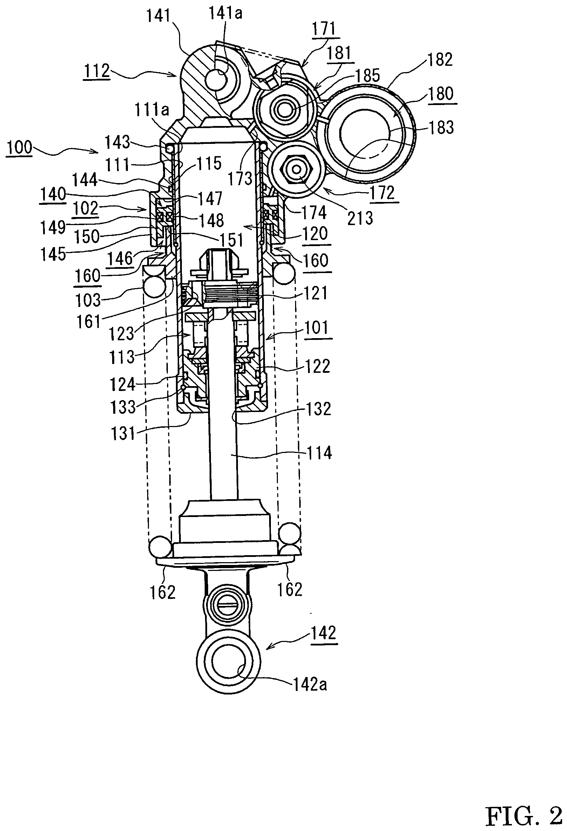

This suspension 100, as shown in Fig. 2, is provided with a damper 101, a spring adjuster 102, and a spring 103.

The damper 101 is provided with a cylinder 111, a cap 112, a piston 113, and a piston rod 114.

The cylinder 111, in this embodiment, is a member shaped like a circular cylinder, and an opening 111a at one end of the cylinder 111 is covered with the cap 112. In the cylinder 111, an oil chamber 120 of the damper 101 is formed in a space surrounded by the one end of the cylinder 111 and the piston 113. Moreover, in this embodiment, the cylinder 111 has the spring adjuster 102 disposed outside one end portion thereof, and the cylinder 111 has a sleeve 115 fitted on the outer periphery of the one end portion thereof.

The piston 113 is fitted in the cylinder 111. In this embodiment, the piston 113 is provided with two members 121, 122 fixed to positions separate in the axial direction of the piston rod 114. A first member 121 disposed on one end side of the cylinder 111 does not completely partition the oil chamber 120 of the damper 101 formed in the cylinder 111, but has a passing portion 123, through which medium can pass, formed in a portion thereof. A second member 122 disposed on the other end side of the cylinder 111 has a seal 124 interposed between itself and the inner peripheral surface of the cylinder 111 to thereby completely partition the oil chamber 120 of the damper 101. In this embodiment, the piston 113 is guided by the cylinder 111 and is slidably fitted in the cylinder in the axial direction of the cylinder 111. The oil chamber 120 has medium enclosed therein, the medium producing viscous resistance. In the damper 101, when the piston 113 moves in the cylinder 111, the medium in the oil chamber 120 applies resistance to the movement of the piston 113 to effectively damp an impact inputted to the suspension 100.

The piston rod 114 extends to the other end side of the cylinder 111 from the piston 113. In this embodiment, the cylinder 111 has a closing member 131 fixed to an opening on the other end thereof, the closing member 131 closing the opening. The closing member 131 has a passing hole 132 formed therein, the passing hole 132 having the piston rod 114 passed therethrough. Moreover, in this embodiment, the cylinder 111 has a stopper 133 fixed on the inner peripheral surface thereof. The stopper 133 defines a range in which the piston 113 moves on the other end side of the cylinder 111. The piston rod 114 has a fixing part 142 disposed on its tip portion, and this suspension 100 has the fixing part 142 fixed to the swing arm 12 of the straddle-type vehicle 10. In this embodiment, the fixing part 142 has a passing hole 142a formed therein, the passing hole 142a having a bolt passed therethrough.

Next, the cap 112, as described above, covers the opening 111a of one end of the cylinder 111 and forms the oil chamber 120 of the damper 101. The cap 112 has a fixing portion 141 formed thereon, the fixing portion 141 being fixed to the straddle-type vehicle 10. In this embodiment, the fixing portion 141 has a fixing hole 141a formed therein, the fixing hole 141a having a bolt passed therethrough.

In this embodiment, the cap 112 is provided with a first damping adjustment mechanism 171 and a second damping adjustment mechanism 171, the second damping adjustment mechanism 171 adjusting the amount of oil in the oil chamber 120 (in the cylinder) of the damper 101, the first damping adjustment mechanism 172 adjusting the amount of oil in an oil chamber 140 of the spring adjuster 102. The cap 112 has an oil passage 173 and an oil passage 174 formed therein, the oil passage 173 connecting the second damping adjustment mechanism 171 to the oil chamber 120 of the damper 101, the oil passage 174 connecting the first damping adjustment mechanism 172 to the oil chamber 140 of the spring adjuster 102. The first damping adjustment mechanism 172 and the second damping adjustment mechanism 171 will be described later.

Moreover, in this embodiment, a first seal 143 is fitted between the peripheral end portion of the opening 111a of one end of the cylinder 111 and the cap 112. The cap 112 extends in the axial direction along the outer peripheral surface of the cylinder 111, and a second seal 144 is fitted between the cap 112 and the outer peripheral surface of one end portion of the cylinder 111 (the outer peripheral surface of a sleeve 115, in this embodiment).

The cap 112 is further provided with a cover portion 145 for covering the outer periphery of one end portion of the cylinder 111. A peripheral groove 146 is formed between the inner peripheral surface of the cover portion 145 and the outer peripheral surface of the one end portion of the cylinder 111 (the outer peripheral surface of the sleeve 115, in this embodiment). In this embodiment, the cover portion 145 is opposed to the outer peripheral surface of the one end portion of the cylinder 111 with a small clearance between them by a step 147 formed on the inner periphery of the cap 112. With this, the peripheral groove 146 is formed between the inner peripheral surface of the cover portion 145 and the outer peripheral surface of the one end portion of the cylinder 111 (the outer peripheral surface of the sleeve 115, in this embodiment). Moreover, the step 147 formed on the inner periphery of the cap 112 forms the bottom portion of the peripheral groove 146. Further, the bottom portion of the peripheral groove 146, as described above, is sealed by the seal 144 fitted between the cap 112 and the outer peripheral surface of the sleeve 115. Still further, in this embodiment, the sleeve 115 is fitted on the outer peripheral surface of the one end portion of the cylinder 111, and the outer peripheral surface of the sleeve 115 has a specified surface roughness. Here, in this embodiment, the cap 112 is molded by casting, and the inner peripheral surface of the cap 112, in particular, a portion forming the peripheral groove 146 surely has a specified surface roughness provided by cutting.

The spring adjuster 102 has the oil chamber 140 formed in the peripheral groove 146. The oil chamber 140 has a ring-shaped piston 150 fitted therein. The ring-shaped piston 150 is slidably fitted in the peripheral groove 146 so as to seal the oil chamber 140. In this embodiment, the ring-shaped piston 150 has a first seal 148 fitted inside, the first seal 148 sliding on the inner peripheral surface of the cover portion 145. Moreover, the ring-shaped piston 150 has a second seal 149 fitted outside, the second seal 149 sliding on the outer peripheral surface of the cylinder 111 (the outer peripheral surface of the sleeve 115, in this embodiment). The oil chamber 140 of the spring adjuster 102 is sealed by the first seal 148 and the second seal 149. Further, in this embodiment, the ring-shaped piston 150 has a receiving portion 151 formed thereon, the receiving portion 151 receiving a first spring seat 161. The ring-shaped piston 150 is moved outward and inward by the amount of oil in the oil chamber 140 of the spring adjuster 102, whereby the position of the first spring seat 161 is changed.

The spring 103 is disposed in a compressed state between the first spring seat 161 fixed to the receiving portion 151 and a second spring seat 162 fixed to the tip portion of the piston rod 114 of the damper 101. When the amount of oil in the oil chamber 140 of the spring adjuster 102 is increased, the ring-shaped piston 150 and the first spring seat 161 are moved outward from the peripheral groove 146. At this time, the spring 103 is contracted and hence is stiffened. Contrarily, the amount of oil in the oil chamber 140 of the spring adjuster 102 is decreased, the ring-shaped piston 150 and the first spring seat 161 is moved inward in the peripheral groove 146. At this time, the spring 103 is elongated by the amount and hence is softened.

In this manner, in this embodiment, the stiffness of the spring 103 is adjusted according to pressure in the oil chamber 140 of the spring adjuster 102. In this embodiment, the first spring seat 161 has a scale 160 placed on the outside surface thereof at a position where the first spring seat 161 overlaps the cover portion 145. In this embodiment, the spring adjuster 102 can be adjusted while looking at the scale 160. The spring adjuster 102 is adjusted by the first damping adjustment mechanism 172 to be described later. Here, in this embodiment, when the spring adjuster 102 is adjusted, the scale 160 is placed on the outside surface of the first spring seat 161 that can be seen from the cover portion 145. The scale 160 may be placed on the ring-shaped piston 150, depending on the mounting structure of the ring-shaped piston 150 and the first spring seat 161.

Next, the first damping adjustment mechanism 172 and the second damping adjustment mechanism 171 will be described.

The second damping adjustment mechanism 171 is a mechanism for adjusting the stiffness (damping performance) of the damper 101. That is, in this embodiment, the stiffness of the damper 101 (damping performance) is adjusted by adjusting the amount of oil in the oil chamber 120 of the damper 101. The amount of oil in the oil chamber 120 of the damper 101 is adjusted by the second damping adjustment mechanism 171. The second damping adjustment mechanism 171 is provided with a check valve 181 and a pressure adjusting part 182. Here, in this embodiment, although not shown, the check valve 181 is constructed in a cylinder-type container.

The pressure adjusting part 182 connects to the oil chamber 120 of the damper 101 through an oil passage 173 formed in the cap 112 and the check valve 181. The pressure adjusting part 182, in this embodiment, is provided with an oil chamber 180 connecting to the oil chamber 120 of the damper 101 through the check valve 181. The oil chamber 180 has a balloon 183 housed therein and has oil packed around the balloon 183, the balloon 183 being packed with gas (nitrogen, in this embodiment) so as to keep a specified pressure.

In this embodiment, when oil pressure in the oil chamber 120 of the damper 101 becomes a specified value or more, the check valve 181 is opened to let the oil in the oil chamber 120 into the oil chamber 180 of the pressure adjusting part 182. Moreover, also when the oil pressure in the oil chamber 120 of the damper 101 is a specified value or less and the oil pressure in the oil chamber 180 of the pressure adjusting part 182 is a specified value or more, the check valve 181 is opened to let the oil into the damper 101 from the pressure adjusting part 182. The pressure of opening the check valve 181, in this embodiment, can be adjusted by operating an adjusting screw 185 fitted in one end portion of the check valve 181 provided with a cylinder-shaped container.

This second damping adjusting mechanism 171 can adjust the amount of oil in the oil chamber 120 of the damper 101 by adjusting the pressure at which the check valve 181 is opened. When the amount of oil in the oil chamber 120 of the damper 101 is increased, the damper 101 is stiffened, whereas when the amount of oil in the oil chamber 120 of the damper 101 is decreased, the damper 101 is softened. For example, when the straddle-type vehicle 10 runs mainly in an urban district, the straddle-type vehicle 10 is used at low speeds, so it suffices to adjust the damper 101 to becoming soft. Contrarily, when the straddle-type vehicle 10 is used at high speeds or in a race, it suffices to adjust the damper 101 to becoming stiff.

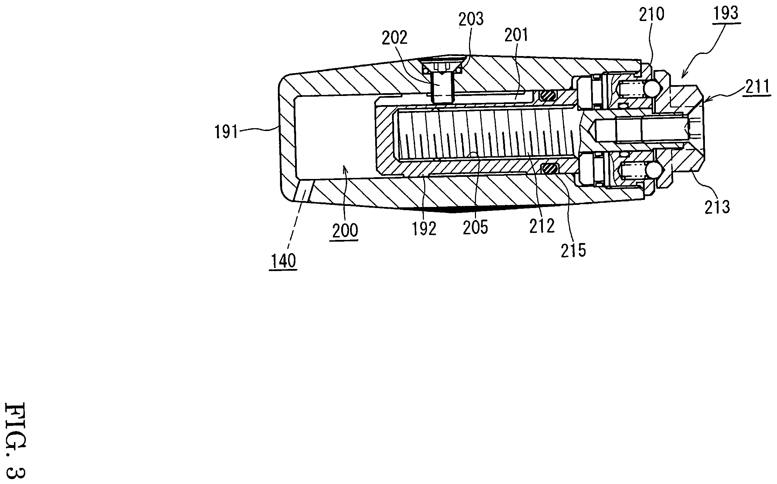

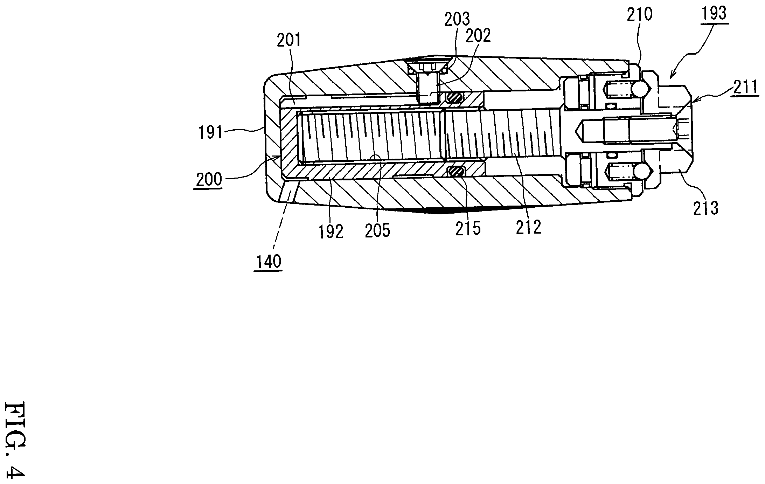

Next, the first damping adjustment mechanism 172 adjusts the spring adjuster 102. In this embodiment, the first damping adjustment mechanism 172, as shown in Fig. 3 and Fig. 4, is provided with a cylinder 191, a piston 192, and a position adjusting mechanism 193 for adjusting the position of the piston 192. The cylinder 191 is a cylindrical member having a bottom and has the piston 192 fitted therein. The piston 192 has a groove 201 formed in an axial direction on the outer peripheral surface thereof, whereas the cylinder 191 has a screw hole formed in a radial direction. The screw hole has a screw 202 fitted therein, and the tip of the screw 202 is fitted in the groove 201 formed in the piston 192. The screw 202 is engaged with the groove 201, so that the piston 192 cannot be rotated with respect to the cylinder 191. Here, the screw hole is sealed by a seal 203.

The piston 192 has a hollow portion having a female screw 205 formed in the axial direction. The position adjusting mechanism 193 is provided with a cap 210 fitted in the opening of the cylinder 191 and an adjusting screw 211 supported by the cap 210 and engaged with the female screw 205 formed in the hollow portion of the piston 192. In this embodiment, the adjusting screw 211 is constructed of a male screw shaft 212 engaged with the female screw 205 formed in the hollow portion of the piston 192; and an operating part 213 that is fixed to one end of the male screw shaft 212 and which operates the male screw shaft 212. In this first damping adjustment mechanism 172, the male screw shaft 212 of the adjusting screw 211 is rotated by rotating the operating part 213. The piston 192 has the screw 202 fitted in the groove 201 formed in the axial direction on its outer peripheral surface, the screw 202 being fitted in the cylinder 191. Hence, the piston 192 is not rotated with respect to the cylinder 191. When the male screw shaft 212 of the position adjusting mechanism 193 is rotated, the female screw 205 formed on the piston 192 is engaged with the male screw shaft 212. The piston 192 is moved back and forth with respect to the cylinder 191 according to the pitch of the screw.

An oil chamber 200 is formed in a space surrounded by the cylinder 191 and the piston 192. The oil chamber 200 is sealed by a seal 215 fitted on the outer peripheral surface of the piston 192.

The oil chamber 200 connects to the oil chamber 140 of the spring adjuster 102 through the oil passage 174 formed in the cap 112 of the suspension 100 (see Fig. 2). When the piston 192 is moved back and forth with respect to the cylinder 191 by the position adjusting mechanism 193, the volume of the oil chamber 200 of the first damping adjustment mechanism 172 is increased and decreased. That is, when the piston 192 is pressed into the cylinder 191, the volume of the oil chamber 200 of the first damping adjustment mechanism 172 is decreased to let the oil in the oil chamber 200 into the oil chamber 140 of the spring adjuster 102. With this, pressure in the oil chamber 140 of the spring adjuster 102 is increased to adjust the spring 103 to becoming stiff. Contrarily, when the piston 192 is pulled up from the cylinder 191 to increase the volume of the oil chamber 200 of the first damping adjustment mechanism 172, the oil in the spring adjuster 102 is pulled into the oil chamber 200 of the first damping adjustment mechanism 172. With this, pressure in the oil chamber 140 of the spring adjuster 102 is decreased to adjust the spring 103 to becoming soft.

Up to this point, the structure of this suspension 100 has been described. In this suspension 100, the stiffness (damping performance) of the damper 101 can be adjusted by the second damping adjustment mechanism 171 for adjusting the amount of oil in the cylinder of the damper 101. Further, the stiffness of the spring 103 can be adjusted by the first damping adjustment mechanism 172 for adjusting the amount of oil in the oil chamber 140 of the spring adjuster 102.

According to this suspension 100, as shown in Fig. 2, the cap 112 for covering the opening at one end of the cylinder 111 is provided with the cover portion 145 that is opposed to the outer peripheral surface of the one end portion of the cylinder 111 with a small gap between them and which covers the one end portion of the cylinder 111. The oil chamber 140 of the spring adjuster 102 is formed in the peripheral groove 146 between the inner peripheral surface of the cover portion 145 and the outer peripheral surface of the one end portion of the cylinder 111 (outer peripheral surface of the sleeve 115, in this embodiment). It suffices for the cylinder 111 to be formed in a simple shape, and the cap 112 including the cover portion 145 is formed in a shape to be manufactured with comparative ease. In this embodiment, the cap 112 is formed in the shape to be easily formed in this manner, so that the cap 112 is molded by casting. With this, the suspension 100 can be manufactured at relatively low cost.

In this embodiment, as described above, the first damping adjustment mechanism 172 and the second damping adjustment mechanism 171 are respectively provided with containers each formed in the shape of a cylinder, and have the longitudinal directions of the cylinders arranged in the same direction. With this, this suspension 100 has an installation space reduced. In this embodiment, to realize the above-mentioned construction, the cap 112 of the damper 101 has holes, in which the cylinders of the first damping adjustment mechanism 172 and the second damping adjustment mechanism 171 are fitted, formed therein in such a way that the cylinders point in the same direction. The fitting holes can be formed, for example, when the cap 112 is cast. Further, in this embodiment, the adjusting screw 185 disposed in one end of the check valve 181 of the second damping adjustment mechanism 171 and the operating part 213 disposed in one end of the first damping adjustment mechanism 172 are arranged on the same side. As shown in Fig. 1, when the suspension 100 is mounted on the straddle-type vehicle 10, the adjusting screw 185 of the check valve 181 of the second damping adjustment mechanism 171 (see Fig. 2) and the operating part 213 of the first damping adjustment mechanism 172 (see Fig. 2) can be operated from a space under the seat. With this, the space required for adjusting the suspension 100 can be reduced.

In this embodiment, the oil passage 173 for connecting the oil chamber 120 of the damper 101 to the oil chamber 180 of the second damping adjustment mechanism 171 and the oil passage 174 for connecting the oil chamber 140 of the spring adjuster 102 to the oil chamber 200 of the first damping adjustment mechanism 172 are formed in the cap 112, respectively. As for these the oil passages 173 and 174, as described above, the shape of the cap 112 is shallow in depth from the opening and is wide in the opening, so that the oil passages 173 and 174 can be formed with comparative ease by the use of a drill or the like.

Up to this point, the suspension according to one embodiment of the present invention has been described, but the suspension according to the present invention is not limited to the embodiment.

For example, the specific structures of the cylinder and the cap of the damper and the respective constituent members of the spring adjuster can be variously modified. Moreover, in this embodiment, the suspension is used for the rear cushion unit of the straddle-type vehicle, and as for the straddle-type vehicle, the suspension can be used for the cushion unit of a vehicle such as a four-wheeled buggy. In this case, the suspension can be used for a cushion unit of a front wheel. Here, "the straddle-type vehicle" includes various kinds of motorcycles, for example, a scooter-type motorcycle, a motor cycle (motorbike). Further, "the straddle-type vehicle" includes a vehicle in which at least one of the front wheel and the rear wheel has two wheels, for example, in addition to the motorcycle, a four-wheeled buggy
(ATV: All Terrain Vehicle) and a snowmobile. Still further, this suspension can be used not only for the straddle-type vehicle but also for the cushion units (dampers) for various uses.

### Description of the Reference Numerals

10- straddle-type vehicle
11- vehicle body frame
12- swing arm
13- rear wheel
14- swing mechanism
100- suspension (suspension apparatus)
101- damper
102- spring adjuster
103- spring
111- cylinder
111a- opening at one end of cylinder
112- cap
113- piston
114- piston rod
115- sleeve
120- oil chamber of damper
121- first member
122- second member
123- passing portion
124- seal
131- closing member
132- passing hole
133- stopper
140- oil chamber of spring adjuster
141- fixing portion
141a- fixing hole
142- fixing part
142a- passing hole
143- seal
144- seal
145- cover portion
146- groove
147- step
148- first seal
149- second seal
150- ring-shaped piston
151- receiving portion
161- first spring seat
162- second spring seat
172- first damping adjustment mechanism
171- second damping adjustment mechanism
173- oil passage
174- oil passage
180- oil chamber of second damping adjustment mechanism
181- check valve
182- pressure adjusting part
183- balloon
185- adjusting screw
191- cylinder of first damping adjustment mechanism
192- piston of first damping adjustment mechanism
193- position adjustment mechanism
200- oil chamber of first damping adjustment mechanism
201- groove
203- seal
210- cap
212- male screw shaft
213- operating part
215- seal

## Claims

1. A suspension apparatus comprising:
a damper (101);
a spring adjuster (102); and
a spring (103),
wherein the damper (101) includes:
a cylinder (111);
a cap (112) for covering an opening (111a) at one end of the cylinder (111);
a piston fitted (113) in the cylinder (111); and
a piston rod (114) extending from the piston (113) to an other end side of the cylinder (111),
wherein the cap (112) has a cover portion (145) that is opposed to an outer peripheral surface of one end portion of the cylinder (111) and which covers the one end portion of the cylinder (111),
wherein the spring adjuster (102) includes:
an oil chamber (140) formed in a peripheral groove (146) between an inner peripheral surface of the cover portion (145) and an outer peripheral surface of the one end portion of the cylinder (111); and
a ring-shaped piston (150) fitted in the oil chamber (140), and
wherein the spring (103) is disposed in a compressed state between a first spring seat (161) formed on the ring-shaped piston (150) and a second spring seat (162) fixed to a tip portion of the piston rod (114);
**characterized in that**:
the suspension apparatus further comprises a first damping adjustment mechanism (172) for adjusting an amount of oil in the oil chamber (140) of the spring adjuster (102); and
the first damping adjustment mechanism (172) is provided at the cap (112) and includes an operating part (213) for operating the first damping adjustment mechanism (172).

2. The suspension apparatus as claimed in claim 1, comprising a second damping adjustment mechanism (171) for adjusting an amount of oil in the cylinder (111) of the damper (101).

3. The suspension apparatus as claimed in claim 2,
wherein the cap (112) has an oil passage (173) formed therein, the oil passage (173) connecting the cylinder (111) of the damper (101) to the second damping adjustment mechanism (171).

4. The suspension apparatus as claimed in any one of the preceding claims,
wherein the cap (112) has an oil passage (174) formed therein, the oil passage (174) connecting the oil chamber (140) of the spring adjuster (102) to the first damping adjustment mechanism (172).

5. The suspension apparatus as claimed in any one of the preceding claims,
wherein the cylinder (111) has a sleeve (115) fitted on an outer peripheral surface of the one end portion of the cylinder (111) at least in a region in which the ring-shaped piston (150) moves.

6. The suspension apparatus as claimed in claim 2,
wherein the first damping adjustment mechanism (172) and the second damping adjustment mechanism (171) include containers each shaped like a cylinder (191), respectively, and have longitudinal directions of the cylinders (191) arranged in a same direction.

7. The suspension apparatus as claimed in any one of the preceding claims,
wherein the cover portion (145) and the ring-shaped piston (150) or the first spring seat (161) has a scale (160) placed thereon, the scale (160) showing an amount of adjustment of the spring adjuster (102).

8. The suspension apparatus as claimed in any one of the preceding claims,
wherein the cap (112) is molded by casting.

9. A straddle-type vehicle (10) in which the cap (112) of the suspension apparatus as claimed in any one of claims 1 to 8 and the tip (142) of the piston rod (114) are interposed between a vehicle body frame (11) and a swing support member (12) of a rear wheel (13).

## Patentansprüche

1. Aufhängungsvorrichtung, die umfasst:
einen Dämpfer (101);
eine Feder-Einstelleinrichtung (102); und
eine Feder (103),
wobei der Dämpfer (101) enthält:
einen Zylinder (111);
eine Kappe (112) zum Abdecken einer Öffnung (111a) an einem Ende des Zylinders (111);
einen Kolben (113), der in den Zylinder (111) eingesetzt ist; und
eine Kolbenstange (114), die sich von dem Kolben (113) zu einer Seite des anderen Endes des Zylinders (111) erstreckt,
wobei die Kappe (112) einen Abdeckungsabschnitt (145) aufweist, der einer Außenumfangsfläche eines Endabschnitts des Zylinders (111) gegenüberliegt und der den einen Endabschnitt des Zylinders (111) abdeckt,
wobei die Feder-Einstelleinrichtung (102) enthält:
eine Ölkammer (140), die in einer Umfangs-Nut (146) zwischen einer Innenumfangsfläche des Abdeckungsabschnitts (145) und einer Außenumfangsfläche des einen Endabschnitts des Zylinders (111) ausgebildet ist; und
einen ringförmigen Kolben (150), der in die Ölkammer (140) eingesetzt ist, und
wobei die Feder (103) in einem zusammengedrückten Zustand zwischen einem ersten Federteller (161), der an dem ringförmigen Kolben (150) ausgebildet ist, und einem zweiten Federteller (162) angeordnet ist, der an einem vorderen Abschnitt der Kolbenstange (114) befestigt ist;
**dadurch gekennzeichnet, dass**:
die Aufhängungsvorrichtung des Weiteren einen ersten Dämpfungs-Einstellmechanismus (172) umfasst, mit dem eine Ölmenge in der Ölkammer (140) der Feder-Einstelleinrichtung (102) eingestellt wird; und
der erste Dämpfungs-Einstellmechanismus (172) sich an der Kappe (112) befindet und einen Betätigungsteil (213) zum Betätigen des ersten Dämpfungs-Einstellmechanismus (172) enthält.

2. Aufhängungsvorrichtung nach Anspruch 1, die einen zweiten Dämpfungs-Einstellmechanismus (171) umfasst, mit dem eine Ölmenge in dem Zylinder (111) des Dämpfers (101) eingestellt wird.

3. Aufhängungsvorrichtung nach Anspruch 2,
wobei in der Kappe (112) ein Ölkanal (173) ausgebildet ist und der Ölkanal (173) den Zylinder (111) des Dämpfers (101) mit dem zweiten Dämpfungs-Einstellmechanismus (171) verbindet.

4. Aufhängungsvorrichtung nach einem der vorangehenden Ansprüche,
wobei in der Kappe (112) ein Ölkanal (174) ausgebildet ist und der Ölkanal (174) die Ölkammer (140) der Feder-Einstelleinrichtung (102) mit dem ersten Dämpfungs-Einstellmechanismus (172) verbindet.

5. Aufhängungsvorrichtung nach einem der vorangehenden Ansprüche,
wobei der Zylinder (111) eine Hülse (115) aufweist, die auf eine Außenumfangsfläche des einen Endabschnitts des Zylinders (111) wenigstens in einem Bereich aufgepasst ist, in dem sich der ringförmige Kolben (150) bewegt.

6. Aufhängungsvorrichtung nach Anspruch 2,
wobei der erste Dämpfungs-Einstellmechanismus (172) und der zweite Dämpfungs-Einstellmechanismus (171) Behälter enthalten, die jeweils wie ein Zylinder (191) geformt sind, und wobei Längsrichtungen der Zylinder (191) in ein und derselben Richtung verlaufen.

7. Aufhängungsvorrichtung nach einem der vorangehenden Ansprüche,
wobei an dem Abdeckungsabschnitt (145) und dem ringförmigen Kolben (150) oder dem ersten Federteller (161) eine Skala (160) angeordnet ist und die Skala (160) ein Maß der Einstellung der Feder-Einstelleinrichtung (102) anzeigt.

8. Aufhängungsvorrichtung nach einem der vorangehenden Ansprüche,
wobei die Kappe (112) mittels Gießen geformt wird.

9. Spreizsitz-Fahrzeug (10), bei dem die Kappe (112) der Aufhängungsvorrichtung nach einem der Ansprüche 1 bis 8 und das vordere Ende (142) der Kolbenstange (114) zwischen einem Fahrzeugkarosserie-Rahmen (11) und einem Schwingen-Trägerelement (12) eines Hinterrades (13) angeordnet sind.

## Revendications

1. Dispositif de suspension comprenant :
un amortisseur (101),
un dispositif d'ajustement de ressort (102), et
un ressort (103),
dans lequel l'amortisseur (101) inclut :
un vérin (111)
une coiffe (112) destinée à recouvrir une ouverture (111a) à une extrémité du vérin (111),
un piston (113) ajusté dans le vérin (111), et
une tige de piston (114) s'étendant depuis le piston (113) jusqu'à une autre partie terminale du vérin (111),
dans lequel la coiffe (112) comporte une partie formant couvercle (145) qui est opposée à la surface périphérique externe d'une partie terminale du vérin (111) et qui recouvre la partie terminale du vérin (111),
dans lequel le dispositif d'ajustement de ressort (102) inclut :
un compartiment d'huile (140) formé dans une rainure périphérique (146) située entre la surface périphérique interne de la partie formant couvercle (145) et la surface périphérique externe de la partie terminale du vérin (111), et
un piston en forme de bague (150) ajusté dans le compartiment d'huile (140), et
dans lequel le ressort (103) est placé à l'état compressé entre un premier siège de ressort (161) formé sur le piston en forme de bague (150) et un second siège de ressort (162) fixé à la pointe de la tige de piston (114),
**caractérisé en ce que** :
le dispositif de suspension comprend en outre un premier mécanisme de réglage d'amortissement (172) destiné à ajuster la quantité d'huile dans le compartiment d'huile (140) du dispositif d'ajustement de ressort (102), et
le premier mécanisme de réglage d'amortissement (172) est prévu au niveau de la coiffe (112) et inclut une pièce fonctionnelle (213) destinée à manoeuvrer le premier mécanisme de réglage d'amortissement (172).

2. Dispositif de suspension selon la revendication 1, comprenant un second mécanisme de réglage d'amortissement (171) destiné à ajuster la quantité d'huile dans le vérin (111) de l'amortisseur (101).

3. Dispositif de suspension selon la revendication 2, dans lequel la coiffe (112) comporte un passage d'huile (173) formé en elle, le passage d'huile (173) raccordant le vérin (111) de l'amortisseur (101) au second mécanisme de réglage d'amortissement (171).

4. Dispositif de suspension selon l'une quelconque des revendications précédentes,
dans lequel la coiffe (112) comporte un passage d'huile (174) formé en elle, le passage d'huile (174) raccordant le compartiment d'huile (140) du dispositif d'ajustement de ressort (102) au premier mécanisme de réglage d'amortissement (172).

5. Dispositif de suspension selon l'une quelconque des revendications précédentes,
dans lequel le vérin (111) comporte un manchon (115) ajusté sur la surface périphérique externe de la partie terminale du vérin (111) au moins dans la zone dans laquelle se déplace le piston en forme de bague (150).

6. Dispositif de suspension selon la revendication 2,
dans lequel le premier mécanisme de réglage d'amortissement (172) et le second mécanisme de réglage d'amortissement (171) incluent respectivement des réservoirs (191), chacun de forme cylindrique ; et les directions longitudinales des cylindres (191) sont disposées dans la même direction.

7. Dispositif de suspension selon l'une quelconque des revendications précédentes,
dans lequel la partie formant couvercle (145) et le piston en forme de bague (150) ou le premier siège de ressort (161) comportent une échelle (160) placée sur eux, l'échelle (160) montrant la valeur d'ajustement du dispositif d'ajustement de ressort (102)

8. Dispositif de suspension selon l'une quelconque des revendications précédentes,
dans lequel la coiffe (112) est obtenue par moulage.

9. Véhicule de type à selle (10) dans lequel la coiffe (112) du dispositif de suspension décrit dans l'une quelconque des revendications 1 à 8 et la pointe (142) de la tige de piston (114) sont intercalées entre un cadre de véhicule (11) et un élément de support oscillant (12) de roue arrière (13).
